**Europäisches Patentamt**

**European Patent Office**

**Office européen des brevets**

(11) Numéro de publication: **0 205 382**

**A1**

(12) # DEMANDE DE BREVET EUROPEEN

(21) Numéro de dépôt: 86401228.1

(22) Date de dépôt: 06.06.86

(51) Int. Cl.4: **G01D 3/04** , **G01D 11/16**

(30) Priorité: 07.06.85 FR 8508637

(43) Date de publication de la demande:
**17.12.86 Bulletin 86/51**

(84) Etats contractants désignés:
**GB IT**

(71) Demandeur: **COMPAGNIE D'INFORMATIQUE MILITAIRE SPATIALE ET AERONAUTIQUE 25, rue de Courcelles F-75008 Paris(FR)**

(72) Inventeur: **Lebrun, Jean
THOMSON-CSF SCPI 19, avenue de Messine F-75008 Paris(FR)**
Inventeur: **Man, André
THOMSON-CSF SCPI 19, avenue de Messine F-75008 Paris(FR)**
Inventeur: **Bize, Jean-Claude
THOMSON-CSF SCPI 19, avenue de Messine F-75008 Paris(FR)**
Inventeur: **Toneatti, Alain
THOMSON-CSF SCPI 19, avenue de Messine F-75008 Paris(FR)**

(74) Mandataire: **Benoit, Monique et al
THOMSON-CSF SCPI 19, avenue de Messine F-75008 Paris(FR)**

(54) **Table traçante sans contrainte de dilatation.**

(57) L'invention concerne principalement une table traçante dont le fonctionnement est indépendant des contraintes de dilatation dues à l'environnement de structure qui appartiennent à la réalisation.

L'invention a principalement pour objet une table traçante comportant des moyens d'entraînement du papier et/ou des moyens de positionnement des stylets présentant des très faibles dilatations. Ces moyens sont adaptés à un chassis (15) pouvant se dilater librement.

L'invention s'applique principalement à la réalisation de tables traçantes gardant leur précision pour large plage de températures.

## TABLE TRAÇANTE SANS CONTRAINTE DE DILATATION

La présente invention a principalement pour objet une table traçante dont le fonctionnement est indépendant des contraintes de dilatation dues à l'environnement de structure qui appartiennent à la réalisation.

L'augmentation de la puissance des calculs des ordinateurs actuels rend nécessaire la réalisation des périphériques de visualisation graphique performant. Un tel périphérique est par exemple un écran graphique à tube cathodique ou une table traçante. Sur cette dernière le papier est rendu solidaire d'un support. Le déplacement du stylet par rapport au papier est obtenu, par déplacement du stylet, le papier restant fixe ; par déplacement du support du papier, le stylet restant fixe ou par combinaison d'un mouvement du support du papier et du stylet. Par exemple le support du papier et le stylet ont des mouvements orthogonaux.

Dans la table traçante de type connu, la précision du tracé obtenu, est limitée par les dilatations du support du papier et des moyens de positionnement du stylet. Ainsi, en cas de dilatation, par exemple du support de papier le stylet va marquer le point se trouvant en dessous de lui, qui ne correspond pas nécessairement au point calculé par l'ordinateur.

La table traçante objet de la présente invention comporte un support du papier et/ou des moyens de positionnement des stylets ne se dilatant pratiquement pas. Ces dispositifs sont adaptés au chassis de la table traçante pouvant se dilater librement. La séparation des fonctions chassis-positionnement des stylets par rapport au papier, permet d'obtenir une table traçante gardant sa précision dans une large gamme de température de fonctionnement.

La présente invention a principalement pour objet une table traçante comportant un chassis, des stylets, des moyens de positionnement de stylets et/ou de porte-stylets, des moyens de support des feuilles d'écriture, caractérisée par le fait que lesdits moyens de positionnement et de support sont désolidarisés dudit chassis de façon à ne pas subir des contraintes mécaniques dues à la dilatation dudit chassis.

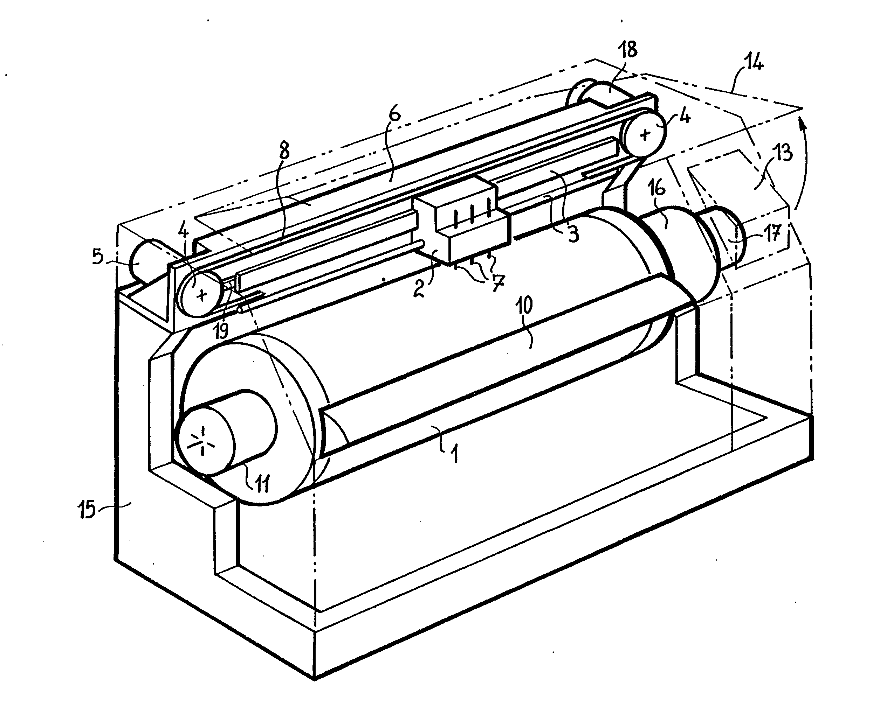

L'invention sera mieux comprise au moyen de la description ci-après de la figure unique annexée donnée comme un exemple non limitatif illustrant une table traçante à tambour comportant un système de positionnement d'un chariot porte-stylets et un tambour sans dilatation.

Sur la figure unique, on peut voir une table traçante à tambour 1. La table traçante comporte un charriot porte-stylets 2 supportant par exemple trois stylets 7. Sur un chassis 15 est montée une poutre 6 supportant le dispositif de positionnement du charriot porte-stylets 2. Le chassis 15 est par exemple en acier inoxydable. La poutre 6 est par exemple en fibre de verre qui a un coefficient de dilatation voisin de l'acier inoxydable. Le charriot 2 se déplace sur deux rails de positionnement 3 dont l'un des deux est un antidevers parallèlement à une génératrice du tambour 1. Le tambour 1 est réalisé dans un matériau à très faible ou sans dilatation comme par exemple le matériau composite. Dans l'exemple préféré de réalisation, la Demanderesse a utilisé la fibre de carbone pour la réalisation du tambour 1 ainsi que pour la barre d'accouplement 19 et de maintien de la distance entre les axes des poulies 4.

L'entraînement du charriot 2 effectué par l'intermédiaire d'une courroie crantée 8. L'exemple préféré de réalisation comporte une courroie 8 armée de fibres vendue sous la marque Kevlar par la Société Dupont de Nenours. La courroie crantée 8 est tendue entre deux poulies 4. Les poulies 4 doivent être réalisées dans un matériau à très faible dilatation. Avantageusement les poulies 4 sont réalisées en un alliage de fer et de nickel appelé invar. L'entraînement de la courroie 8 effectué sur une desdites poulies 4. L'autre poulie 4 est montée sur un palier coulissant 5, lui permettant de ne pas suivre les dilatations du chassis 15 et de la poutre 6. Avantageusement la distance entre les poulies 4 est maintenue constante par la solidarisation des poulies 4 avec une barre d'accouplement 19 en matériau sans dilatation. Ainsi la longueur et la tension de la courroie crantée 8 ne varie pas avec la température. Avantageusement, c'est la barre d'accouplement 19 qui joue le rôle de maintien des constantes de tension de la courroie indépendamment de la dilatation.

Le tambour 1 est monté sur un palier libre 11. Le palier 11 est par exemple en acier inoxydable. Ainsi les dilatations du palier 11 n'induisent pas de tension mécanique dans le tambour 1.

Dans l'exemple préféré de réalisation du dispositif selon l'invention le tambour 1 est accouplé directement à son moteur d'entraînement 16 et à un codeur 17. Le codeur 17 est par exemple un codeur à seize bits susceptible de générer $2^{16}$ impulsions électriques par tour. Le codeur 17 est par exemple un codeur absolu.

L'entraînement direct permet une bonne transmission du couple et une grande précision sur l'accélération donnée au tambour 1. De même la réalisation en fibre de carbone du tambour 1 en réduisant sa masse réduit l'inertie de celui-ci.

En fonctionnement la température du moteur s'élève par exemple à 323 K. Dans un exemple de réalisation du dispositif selon l'invention l'accouplage entre le moteur 16 susceptible de dilatation radiale, et le tambour 1 est effectué par deux bagues en invar. La première bague est solidaire du tambour 1, tandis qu'une seconde bague est rendue solidaire du moteur 16 susceptible de dilatation. La bague en invar rendue solidaire du moteur 16 comporte des découpes radiales lui permettant de suivre les dilatations du moteur 16. Les deux bagues en invar permettent la transmission du mouvement du moteur 16 au tambour 1.

La courroie 8 crantée est entraînée par un moteur 18 associé à un codeur par exemple à 14 bits. Le codeur est susceptible de générer $2^{14}$ impulsions électriques pour un déplacement du charriot 2 porte-stylets égal à la longueur d'une génératrice du tambour 1.

Un dispositif 10 permet le chargement de papier sur le tambour 1. Un capot 14 est représenté en ligne discontinue en position ouverte. Un tableau de commande 13 permet le contrôle du fonctionnement de la table traçante selon l'invention.

La table traçante selon l'invention est destinée à être reliée à un ordinateur à travers une interface appropriée (non représentée).

La table traçante selon l'invention permet d'obtenir des tracés de grande précision. Ainsi on a obtenu un écart inférieur à un dizième de millimètre entre deux diagonales tracées sur chacune des faces d'un papier carré d'un mètre de côté, et ceci pour des températures comprises entre 263 K et 313 K. De plus, le choix des matériaux et leur agencement permettent de stocker la table traçante selon l'invention dans une gamme de température étendue sans dommage pour celle-ci.

Les tables traçantes planes et les tables traçantes à rouleau ne sortent pas du cadre de la présente invention.

La présente invention s'applique principalement à la réalisation de tables traçantes répondant aux spécifications militaires.

## Revendications

1. Table traçante comportant un chassis (15), des stylets (7), des moyens (19) de positionnement de stylets (7) et/ou de porte-stylets (2), des moyens de support (1) des feuilles d'écriture, caractérisée par le fait que lesdits moyens (1 et/ou 19) sont désolidarisés dudit chassis (15) de façon à ne pas subir des contraintes mécaniques dues à la dilatation dudit chassis.

2. Table traçante selon la revendication 1, caractérisée par le fait que les moyens (19) de positionnement de stylets (7) et/ou des porte-stylets - (2) et/ou les moyens (1) de support de feuilles d'écriture sont réalisés dans un matériau sans dilatation.

3. Table traçante selon la revendication 2, caractérisée par le fait que ledit matériau sans dilatation est un matériau composite.

4. Table traçante selon la revendication 3, caractérisée par le fait que ledit matériau composite est de la fibre de carborne.

5. Table traçante selon la revendication 1, 2, 3 ou 4, caractérisée par le fait que les moyens de support (1) des feuilles d'écriture est un tambour entraîné en rotation par un moteur (16), ladite rotation étant mesurée par un codeur (17) ; les stylets - (7) sont susceptibles d'être déplacés parallèlement à une génératrice dudit tambour.

6. Table traçante selon la revendication 5, caractérisée par le fait que le moteur (16) assure l'entraînement direct du tambour (1).

7. Table traçante selon l'une quelconque des revendications précédentes, caractérisée par le fait que les stylets (7) et/ou les porte-stylets (2) sont susceptibles d'être mis en translation par une courroie (8) crantée dont la longueur ne varie pas avec la température.

8. Table traçante selon la revendication 7, caractérisée par le fait que la courroie (8) crantée comporte des fibres Kevlar.

9. Table traçante selon la revendication 7 ou 8, caractérisée par le fait que la courroie (8) crantée est tendue entre deux poulies (4) réalisées en invar, une première poulie (4) est rendue solidaire du chassis (15), une seconde poulie (4) est fixée au chassis (15) par un palier coulissant (5) ; la tension de la courroie (8) crantée étant fixée par une barre d'accouplement (19).

10. Table traçante selon l'une quelconque des revendications 5 à 9, caractérisée par le fait que le tambour (1) est monté sur un palier libre (11) qui ainsi ne transmet pas les contraintes de dilatation audit tambour (1) du chassis.

0 205 382

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 333 251 (RAYTHEON)<br><br>* Page 1, ligne 32 - page 2, ligne 35 *<br><br>--- | 1-3,5-7 | G 01 D 3/04<br>G 01 D 11/16 |
| Y | FR-A-2 280 148 (CALIFORNIA COMPUTER PRODUCTS)<br>* Page 3, ligne 32 - page 4, ligne 25; figure 4d; page 5, lignes 11-27 *<br><br>----- | 1-3,5-7 | |

**DOMAINES TECHNIQUES RECHERCHES (Int. Cl.4)**

G 01 D

Le présent rapport de recherche a été établi pour toutes les revendications

| Lieu de la recherche | Date d'achèvement de la recherche | Examinateur |
|---|---|---|
| LA HAYE | 14-08-1986 | HOORNAERT W. |